# FASCICULE DE BREVET EUROPEEN

(11) **EP 4 061 672 B1**
(45) Date de publication et mention de la délivrance du brevet: **03.07.2024**
(21) Numéro de dépôt: 20810964.5
(22) Date de dépôt: 20.11.2020
(51) Int. Cl.: B60Q 3/12, B60Q 3/14, B60Q 3/51, B60Q 3/54, B60Q 3/64, B60Q 3/78

(54) **MODULE LUMINEUX POUR L'ÉCLAIRAGE D'UN HABITACLE DE VÉHICULE**
LICHTMODUL FÜR DIE BELEUCHTUNG EINES FAHRZEUGINNENRAUMS
LIGHT MODULE FOR VEHICLE INTERIOR LIGHTING

(30) Priorité: 21.11.2019 FR 1913056
(43) Date de publication de la demande: 28.09.2022
(73) Titulaire: VALEO VISION, 93012 Bobigny Cedex (FR)
(72) Inventeur: XUE, Jingjing, 93012 BOBIGNY Cedex (FR); LIARD, Laurent, 93012 BOBIGNY Cedex (FR)
(74) Mandataire: Valeo Visibility
(86) Numéro de dépôt international: PCT/EP2020/082990
(87) Numéro de publication internationale: WO 2021/099623

(56) Documents cités:
- WO-A1-2016/208388
- DE-U1-202018 104 438
- FR-A1- 2 751 285
- FR-A1- 3 009 526
- JP-A- 2015 025 715
- JP-A- 2018 002 117

## Description

La présente invention se rapporte au domaine de l'éclairage intérieur dans le domaine de l'automobile et en particulier l'éclairage de l'habitacle d'un véhicule. Les différentes parois délimitant l'habitacle des véhicules automobiles, qu'elles consistent en des panneaux de porte, une console de planche de bord ou un pavillon par exemple, peuvent être munies de différents matériaux en fonction du style du véhicule et du rendu visuel pour les passagers que l'on souhaite donner à cet habitacle. On parle notamment dans ce contexte d'habillage intérieur du véhicule, et des matériaux variés comme du bois, du plastique ou du tissu par exemple peuvent être mis en oeuvre pour réaliser cet habillage intérieur.

Il est connu d'associer à ces matériaux d'habillage intérieur une source lumineuse qui éclaire tout ou partie du panneau réalisé avec le matériau d'habillage intérieur, pour mettre en valeur ce matériau.

Pour les véhicules dans lesquels des matériaux dits nobles sont utilisés, il est notamment recherché que ces matériaux soient bien éclairés quelle que soit la luminosité dans l'habitacle, afin que le rendu esthétique souhaité soit obtenu aussi bien dans des conditions diurnes que nocturnes. Il convient toutefois de ne pas produire un éclairage trop intensif du matériau d'habillage intérieur de façon systématique, afin d'éviter que les occupants, conducteur ou passagers, puissent être gênés ou distraits la nuit.

La présente invention s'inscrit dans ce contexte en proposant un module lumineux qui permette la mise en valeur d'un élément d'habillage de l'habitacle d'un véhicule sans risque de suréclairage pouvant gêner la conduite du véhicule.

Plus particulièrement, la présente invention propose un module lumineux pour l'éclairage intérieur d'un véhicule, le module lumineux comprenant au moins une source lumineuse configurée pour émettre des rayons lumineux et un élément d'habillage agencé sur le trajet des rayons lumineux émis par l'au moins une source lumineuse, le module lumineux comportant au moins une première source lumineuse configurée pour émettre des rayons lumineux sur une première face de l'élément d'habillage et au moins une deuxième source lumineuse configurée pour émettre des rayons lumineux sur une deuxième face de l'élément d'habillage opposée à ladite première face.

Le module lumineux présente ainsi deux sources lumineuses agencées de manière à éclairer chacune une face différente de l'élément d'habillage. Plus particulièrement, l'élément d'habillage et la première source lumineuse sont configurés pour que la première source lumineuse émette des rayons lumineux à travers l'élément d'habillage, depuis la première face de l'élément d'habillage vers la deuxième face de l'élément d'habillage, produisant ainsi un rétroéclairage. L'élément d'habillage et la deuxième source lumineuse sont configurés pour que les rayons lumineux émis par la deuxième source lumineuse soient réfléchis sur la deuxième face de l'élément d'habillage. De la sorte, chacune des sources lumineuses du module lumineux participe à produire un éclairage différent, l'une des sources lumineuses permettant de réaliser un éclairage direct au travers de l'élément d'habillage, ou rétroéclairage, l'autre source lumineuse permettant de réaliser un éclairage indirect par réflexion des rayons lumineux sur l'élément d'habillage.

Le rétroéclairage produit un éclairage direct dans lequel les rayons lumineux, n'étant pas réfléchis et traversant directement l'élément d'habillage, gardent intacte, ou quasiment intacte leur intensité lumineuse initiale, de sorte que ce rétroéclairage peut notamment être mis en oeuvre dans des conditions diurnes, les rayons lumineux produisant une intensité lumineuse suffisante pour rendre apparents en journée les motifs et textures du matériau choisi pour l'élément d'habillage. L'éclairage par réflexion sur la face de diffusion produit par ailleurs un éclairage indirect dans lequel le faisceau lumineux est moins intense qu'un éclairage direct, de sorte que cet éclairage indirect peut notamment être mis en oeuvre dans des conditions nocturnes, ou dans des cas souhaités par les occupants d'éclairage tamisé.

De cette façon, le module lumineux selon l'invention peut permettre un éclairage intérieur adaptatif en ce que l'allumage de l'une ou l'autre des sources lumineuses permet de proposer un éclairage de l'élément d'habillage à forte intensité lumineuse ou à intensité lumineuse réduite.

Le rétroéclairage ou l'éclairage direct peut être privilégié selon les conditions de luminosité dans l'habitacle, et ils peuvent être mis en oeuvre simultanément, pour rendre d'autant plus visible la pièce décorative formée par l'élément d'habillage.

Selon une caractéristique optionnelle de l'invention, l'au moins une première source lumineuse et l'au moins une deuxième source consistent respectivement en une série de diodes électroluminescentes.

Selon une autre caractéristique optionnelle de l'invention, la deuxième face de l'élément d'habillage est configurée pour permettre la réflexion de rayons lumineux, la deuxième source émettant des rayons qui sont réfléchis par cette deuxième face. En d'autres termes, la deuxième face de la surface de diffusion peut présenter au moins localement des propriétés réfléchissantes, le cas échéant par l'intermédiaire d'un revêtement additionnel rapporté sur cette deuxième face, pour réfléchir les rayons lumineux émis par la deuxième source lumineuse.

Selon une autre caractéristique optionnelle de l'invention, l'élément d'habillage est configuré pour permettre le passage de rayons lumineux au travers dudit élément d'habillage, la première source émettant des rayons à travers l'élément d'habillage pour produire un rétroéclairage. En d'autres termes, l'élément d'habillage de l'habitacle que comporte le module lumineux selon l'invention présente des zones, le cas échéant locales, à travers lesquelles les rayons lumineux sont diffusés. L'élément d'habillage de l'habitacle est notamment un panneau visant à habiller ou garnir un élément structurel de l'habitacle, et la matière, la texture et/ou les motifs de ce panneau sont mis en valeur par l'éclairage produit par les sources lumineuses. Cet élément d'habillage peut être réalisé en une matière tolérant le passage de rayons lumineux à travers cette surface, comme un élément transparent par exemple ou bien comme un matériau comme du tissu par exemple dont l'épaisseur est dimensionnée pour laisser passer la lumière. Cet élément d'habillage peut également être réalisé dans une matière totalement opaque mais présentant localement un moyen autorisant le passage de rayons lumineux au travers de la surface, comme une paroi de bois présentant au moins une ouverture à travers laquelle les rayons lumineux sont diffusés. Également, on pourrait prévoir que l'épaisseur du matériau opaque soit localement suffisamment fine pour laisser passer la lumière au niveau de ces zones de faible épaisseur.

Selon une caractéristique optionnelle de l'invention, la première source lumineuse, la deuxième source lumineuse et l'élément d'habillage sont configurés pour que les rayons émis se propagent vers l'extérieur du module lumineux depuis la deuxième face de l'élément d'habillage. En d'autres termes, l'ensemble des rayons lumineux émis par la première source lumineuse et par la deuxième source lumineuse sort du même côté de l'élément diffusant, une partie de ces rayons ayant été réfléchie par une face de l'élément diffusant et l'autre partie de ces rayons ayant traversé l'élément diffusant, de sorte à produire à la fois un éclairage indirect et un rétroéclairage.

Selon une caractéristique optionnelle de l'invention, le module lumineux comporte une nappe de guidage de lumière interposée entre la première source lumineuse et la première face de l'élément d'habillage.

La première source lumineuse émet des rayons lumineux à travers la nappe de guidage de lumière configuré pour projeter lesdits rayons vers la première face de l'élément d'habillage. Plus particulièrement, la nappe de guidage de lumière est telle qu'elle présente une face de sortie disposée en regard de la première face de l'élément d'habillage et un bord d'extrémité disposé en regard de la première source lumineuse. Les rayons lumineux de la première source lumineuse sont ainsi projetés à travers la nappe de guidage de lumière au niveau de son bord d'extrémité. La nappe de guidage de lumière guide les rayons lumineux par réflexions totales successives vers des zones de la face de sortie agencées en regard des zones de la surface de diffusion qui permettent la traversée de rayons lumineux.

Selon une autre caractéristique optionnelle de l'invention, le module lumineux comporte au moins un réflecteur interposé entre l'une des sources lumineuses et l'une des faces de l'élément d'habillage.

En d'autres termes, la première source lumineuse et/ou la deuxième source lumineuse émettent des rayons lumineux sur un réflecteur réorientant les rayons lumineux sur l'une des faces de l'élément d'habillage.

Le module lumineux peut comprendre au moins un réflecteur permettant d'orienter les rayons lumineux sur une des faces de la surface de diffusion, mais alternativement vers un bord d'extrémité d'une nappe de guidage de lumière telle qu'évoquée précédemment, lorsque la première source lumineuse n'est pas directement en regard de l'extrémité de la nappe de guidage de lumière.

Par ailleurs, un réflecteur, ou paroi réfléchissante, peut être disposée à l'arrière de l'élément d'habillage et de la nappe de guidage pour renvoyer les rayons lumineux qui sortiraient de la nappe de guidage dans la mauvaise direction, c'est-à-dire à l'opposé de l'élément d'habillage de l'habitacle, et pour renvoyer le cas échéant des rayons émis par la deuxième source lumineuse ayant traversés une première fois l'élément d'habillage.

Selon l'invention, la première source lumineuse et la deuxième source lumineuse sont disposées sur une bande électronique souple.

La bande électronique souple consiste notamment en une carte de circuits imprimés flexible, c'est-à-dire présentant une souplesse telle que la bande électronique peut être conformée pour s'étendre de manière courbée ou dans des directions sécantes avec des arêtes de pliage, de manière à s'adapter à la forme du module lumineux et de sorte que les sources lumineuses qu'elle porte puissent émettre des rayons lumineux selon des directions principales différentes.

Tel que cela a été précisé précédemment, chaque source lumineuse peut consister en une série de sources émettrices. Dans ce contexte, les sources émettrices de rayons lumineux s'étendent avantageusement de manière régulière sur la bande électronique souple.

Selon l'invention, la première source lumineuse et la deuxième source lumineuse sont disposées sur la même bande électronique souple. Préférentiellement, la première source lumineuse s'étend proche d'une des extrémités de la bande électronique souple, la deuxième source lumineuse s'étendant proche de l'autre extrémité de la bande électronique. Ainsi, un module lumineux comprenant une première bande électronique souple présentant la première source lumineuse et une deuxième bande électronique souple présentant la deuxième source lumineuse sort du cadre de l'invention.

Selon l'invention, la bande électronique souple présente une zone de pliage entre la première source lumineuse et la deuxième source lumineuse.

La première source lumineuse et la deuxième source lumineuse sont chacune disposées sur une section s'étendant depuis des extrémités opposées de la bande électronique souple, ces sections encadrant la zone de pliage de la bande électronique souple.

La zone de pliage est ainsi une zone dépourvue de sources lumineuses dans laquelle au moins une arête de pliage est ménagée pour donner à la bande électronique souple une forme appropriée. La bande électronique souple peut ainsi être pliée une ou plusieurs fois selon un ou plusieurs angles de pliage, permettant d'une part d'adapter l'orientation des rayons lumineux émis par les sources lumineuses, mais également d'adapter la position de la bande électronique souple sur le module lumineux.

Selon une autre caractéristique optionnelle de l'invention, le module lumineux comprend une première zone d'extrémité et une deuxième zone d'extrémité de part et d'autre de la surface de diffusion, caractérisé en ce que la bande électronique souple est ménagée au niveau d'au moins une des zones d'extrémité du module lumineux.

La bande électronique souple porteuse des deux sources lumineuses peut être disposée alternativement sur chacune des zones d'extrémité du module lumineux, mais le module lumineux peut également comprendre deux bandes électroniques souples, chacune disposée dans une des zones d'extrémité du module lumineux, ce qui peut permettre d'homogénéiser l'éclairage sur l'ensemble du module lumineux.

Selon une autre caractéristique optionnelle de l'invention, la première source lumineuse et la deuxième source lumineuse sont agencées pour émettre des rayons lumineux selon des sens principaux d'émission différents.

En d'autres termes, les rayons lumineux émis par la première source lumineuse peuvent être émis vers la première face de la surface de diffusion avec une direction d'émission différente de celle des rayons lumineux émis par la deuxième source lumineuse en direction de la deuxième face de la surface de diffusion, ou bien ces rayons lumineux émis par la première et la deuxième source lumineuse peuvent présenter une même direction principale d'émission mais avec des sens opposés.

Selon une autre caractéristique optionnelle de l'invention, le module lumineux comprend un module de contrôle configuré pour piloter l'alimentation électrique de la première source lumineuse et l'alimentation électrique de la deuxième source lumineuse.

En d'autres termes, le module de contrôle est apte à émettre aussi bien des instructions de commande pour la première source lumineuse que pour la deuxième source lumineuse. Ces instructions de commande peuvent être envoyées alternativement ou simultanément. A titre d'exemple non limitatif, on peut privilégier l'alimentation d'une des sources lumineuses dans des conditions diurnes, pour favoriser un éclairage intérieur par rétroéclairage, et l'alimentation de l'autre source dans des conditions nocturnes, pour favoriser un éclairage intérieur par éclairage direct. Le cas échéant, la combinaison de l'alimentation des deux sources est possible dans des cas où un maximum d'intensité lumineuse est souhaitable, notamment pour mettre en valeur le matériau dit noble utilisé pour réaliser l'élément d'habillage.

Selon une autre caractéristique optionnelle de l'invention, le module de contrôle est configuré pour adapter l'alimentation de la première source lumineuse et/ou de la deuxième source lumineuse.

A titre d'exemple non limitatif, le module de contrôle est configuré pour recevoir des données relatives à la luminosité extérieure et/ou la luminosité intérieure de l'habitacle par des capteurs de luminosité appropriés. Le module de contrôle analyse ces données puis envoie des instructions d'alimentation au module lumineux indiquant si les sources d'alimentation peuvent ou non être alimentées.

D'autres caractéristiques, détails et avantages de l'invention ressortiront plus clairement à la lecture de la description qui suit d'une part, et de plusieurs exemples de réalisation donnés à titre indicatif et non limitatif en référence aux dessins schématiques annexés d'autre part, parmi lesquels :
[Fig. 1] est une vue d'un véhicule équipé d'un module lumineux selon l'invention ;
[Fig. 2] est une vue en perspective d'un module lumineux selon un premier mode de réalisation présentant une première source lumineuse et une deuxième source lumineuse disposées dans des zones d'extrémité du module lumineux ;
[Fig. 3] est une coupe transversale du module lumineux représenté sur la figure 2 ;
[Fig. 4] est une vue en perspective d'une bande électronique souple équipant un module lumineux selon l'invention ;
[Fig. 5] est une représentation schématique d'une coupe d'un module lumineux selon un deuxième mode de réalisation sortant du cadre de l'invention et comprenant une première source lumineuse éclairant directement une première face d'une surface de diffusion et un îlot dans lequel est ménagée une deuxième source lumineuse configurée pour éclairer une deuxième face de la surface de diffusion ;
[Fig. 6] est une représentation schématique d'une coupe d'un module lumineux selon un troisième mode réalisation ;
[Fig. 7] est une représentation schématique d'une coupe d'un module lumineux selon un quatrième mode de réalisation sortant du cadre de l'invention ;
[Fig. 8] est une représentation schématique d'une coupe d'un module lumineux selon un cinquième mode de réalisation sortant du cadre de l'invention ;
[Fig. 9] est une représentation schématique d'une coupe d'un module lumineux selon un sixième mode de réalisation sortant du cadre de l'invention ;
[Fig. 10] est une représentation schématique d'une coupe d'un module lumineux selon un septième mode de réalisation sortant du cadre de l'invention ;
[Fig. 11] est une représentation schématique d'une coupe d'un module lumineux selon un huitième mode de réalisation sortant du cadre de l'invention ;
[Fig. 12] est une représentation schématique d'une coupe d'un module lumineux selon un neuvième mode de réalisation sortant du cadre de l'invention.

Les caractéristiques, variantes et les différentes formes de réalisation de l'invention peuvent être associées les unes avec les autres, selon diverses combinaisons, dans la mesure où elles ne sont pas incompatibles ou exclusives les unes par rapport aux autres. Le cadre de l'invention est défini par les revendications annexées.

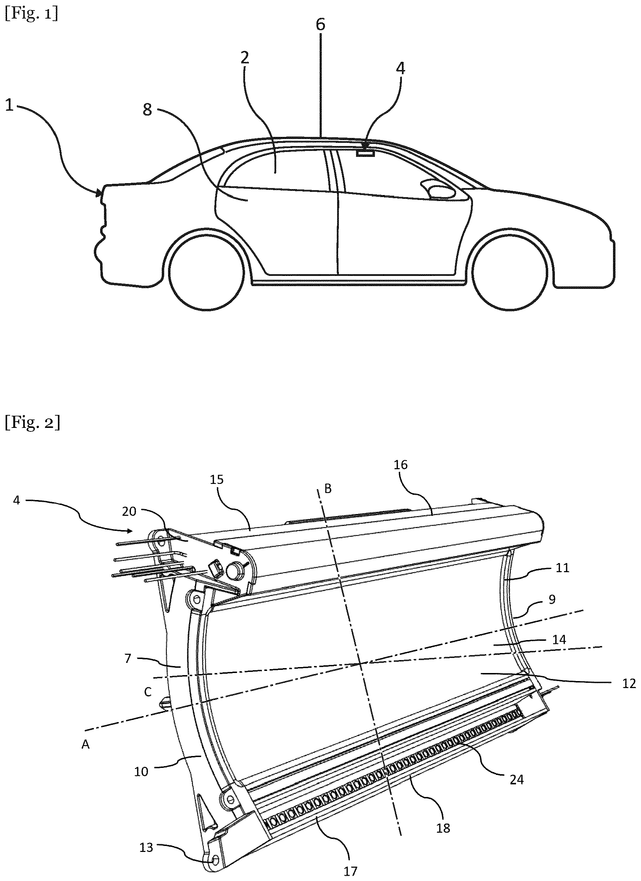

Tout d'abord en référence avec la figure 1, un véhicule 1 comprend un habitacle 2. L'habitacle 2 représente l'espace interne du véhicule 1 dans lequel le conducteur prend place pour utiliser le véhicule 1. L'habitacle 2 comporte au moins un module lumineux 4 selon l'invention. Le module lumineux 4 est ménagé ici sur un plafond 6 de l'habitacle 2 mais il convient de noter que cet agencement est illustré à titre d'exemple et que sans sortir du contexte de l'invention, un ou plusieurs modules lumineux 4 pourraient être disposés dans d'autres zones de l'habitacle 2, et par exemple sur une porte 8 ou un tableau de bord.

Le module lumineux 4 a notamment pour fonction d'éclairer un panneau d'habillage ou de garniture d'une partie de l'habitacle et, selon l'invention, il est particulièrement adapté à proposer un éclairage adaptatif selon la convenance du conducteur et/ou d'une détection de la luminosité extérieure ou au sein de l'habitacle afin de mettre en valeur plus particulièrement le panneau d'habillage ou de garniture. Pour cela, le module lumineux 4 comprend une pluralité de sources lumineuses comme des diodes électroluminescentes et un élément d'habillage sur lequel les sources lumineuses sont aptes à émettre leurs rayons de manière à pouvoir proposer un éclairage direct, ou rétroéclairage, de l'élément d'habillage, et/ou un éclairage indirect de cet élément d'habillage, par réflexion des rayons sur une face de l'élément d'habillage.

Avantageusement, le module lumineux 4 est relié à un module de contrôle non représenté sur l'ensemble des figures. Le module de contrôle intervient pour émettre des instructions de commande au module lumineux 4 pour alimenter ou non le module lumineux 4 et produire un rétroéclairage et/ou un éclairage indirect. Le module de contrôle émet ces instructions selon l'actionnement de boutons de commande par l'utilisateur et/ou selon des informations reçues relatives à la luminosité, par exemple reçues de capteurs également non représentés sur l'ensemble des figures. Ces capteurs peuvent par exemple mesurer la luminosité extérieure et/ou la luminosité de l'habitacle 2 et transmettre un ensemble d'informations découlant de ces mesures au module de contrôle, ce dernier émettant ensuite une instruction de commande adaptée au module lumineux 4.

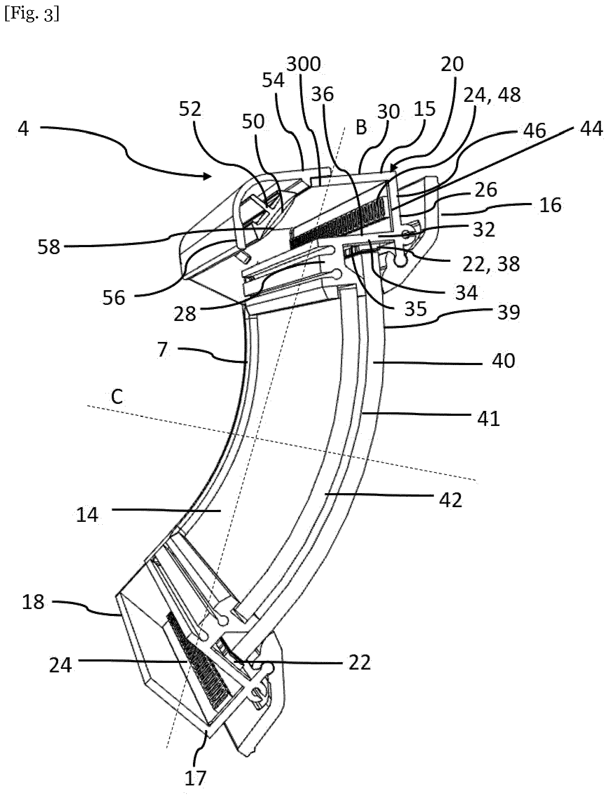

Le module lumineux 4 comprend ainsi au moins deux sources lumineuses, l'une permettant de réaliser un rétroéclairage, l'autre permettant de réaliser un éclairage indirect, le module lumineux 4 pouvant être réalisé selon différents modes de réalisation. Plusieurs de ces modes de réalisation seront décrits à la suite de la description détaillée d'un premier mode de réalisation qui va suivre, en référence aux figures 2 et 3.

Dans ce premier mode de réalisation, le module lumineux 4 s'étend principalement le long d'un axe longitudinal A entre une première extrémité longitudinale 7 et une deuxième extrémité longitudinale 9. Le module lumineux 4 s'étend également, sous la forme d'une courbe, le long d'un axe vertical B entre une première zone d'extrémité verticale 15 et une deuxième zone d'extrémité verticale 17. Tel qu'illustré sur les figures 2 et 3, l'axe longitudinal A et l'axe vertical B, perpendiculaires l'un par rapport à l'autre, participent à définir un plan principal d'extension du module lumineux 4.

Le module lumineux 4 comprend un premier support 10 au niveau de la première extrémité longitudinale 7 et un deuxième support 11 au niveau de la deuxième extrémité longitudinale 9. Le premier et le deuxième support 10, 11 sont fixés à l'un des éléments de l'habitacle 2 du véhicule 1 par différents moyens de fixations comme des vis par exemple, les supports présentant ici une pluralité d'orifices de vissage 13. Lors du montage du module lumineux 4 dans l'habitacle 2, des vis non représentées sur l'ensemble des figures sont insérées à travers la pluralité d'orifices de vissage 13 pour fixer chaque support 10, 11 à un élément de l'habitacle 2.

Le module lumineux 4 comprend également une surface de diffusion 12. La surface de diffusion 12 est un élément optique à partir duquel l'ensemble des rayons lumineux, émis à l'origine par les sources lumineuses précédemment évoquées, sont émis en direction de l'habitacle 2. La surface de diffusion 12 est constituée au moins partiellement d'un matériau configuré pour laisser filtrer la lumière depuis l'intérieur du module lumineux 4 non visible sur la figure 2 vers l'extérieur du module lumineux 4 et cette surface de diffusion 12 comporte par ailleurs une première face 42, également appelée arbitrairement par la suite face arrière 42, et une deuxième face opposée 14, également appelée arbitrairement par la suite face avant 14.

La surface de diffusion 12 peut être un élément optique sensiblement transparent, comme une lentille par exemple, ou bien un élément opaque ajouré en différents endroits pour être traversé par des premiers rayons lumineux et comportant un revêtement réfléchissant pour réfléchir des deuxièmes rayons lumineux, comme une paroi en bois présentant plusieurs orifices ou un tissu plus ou moins épais par exemple. On comprend que le choix du ou des matériaux de la surface de diffusion 12, qui peut notamment être dicté par des choix esthétiques liés au design de l'habitacle 2 du véhicule 1, a pour effet d'influencer la luminosité produite par le module lumineux 4, en produisant un éclairage à haute intensité ou plus diffus.

La surface de diffusion 12 s'étend principalement le long de l'axe longitudinal A entre le premier support 10 et le deuxième support 11, la surface de diffusion 12 étant solidaire du premier support 10 et du deuxième support 11. Le premier support 10 et le deuxième support 11 sont ici symétriques l'un par à l'autre par rapport à la surface de diffusion 12. Tel que cela est visible sur la figure 2, la surface de diffusion 12, le premier support 10, le deuxième support 11 s'étendent le long de l'axe vertical B entre la première zone d'extrémité verticale 15 et la deuxième zone d'extrémité verticale 17.

Le module lumineux 4 comprend un premier bloc lumineux 16 au niveau de la première zone d'extrémité verticale 15 et un deuxième bloc lumineux 18 au niveau de la deuxième zone d'extrémité verticale 17. Le premier bloc lumineux 16 et le deuxième bloc lumineux 18 s'étendent le long l'axe longitudinal A entre le premier support 10 et le deuxième support 11. Sur la figure 2, le deuxième bloc lumineux 18 a été représenté avec des sources lumineuses apparentes, non masquées par un bloc réflecteur visible pour le premier bloc lumineux 16. Il convient de comprendre que dans le cas illustré, le premier bloc lumineux 16 est symétrique au deuxième bloc lumineux 18 par rapport à la surface de diffusion 12, de sorte que les éléments décrits sur l'un des blocs lumineux 16, 18 sont également présents sur l'autre bloc lumineux 16, 18. Il convient de noter par ailleurs que le module lumineux 4 pourrait sans sortir du contexte de l'invention n'être équipé que d'un des blocs lumineux 16, 18 qui vont maintenant être décrits.

Tel qu'illustré sur la figure 3, le premier bloc lumineux 16 présente un socle lumineux 20 sur lequel sont ménagées une première source lumineuse 22 et au moins une deuxième source lumineuse 24. La première source lumineuse 22 est apte à émettre des rayons lumineux, ici via un guide de lumière sous forme de nappe, permettant un éclairage direct de l'habitacle 2, par rétroéclairage de la surface diffusante 12, et la deuxième source lumineuse 24 est apte à émettre des rayons lumineux en direction de la face de la surface diffusante 12 tournée en regard de l'habitacle 2, pour réaliser un éclairage indirect de cet habitacle 2.

L'éclairage indirect produit par la deuxième source lumineuse 24 sera décrit à la suite de la description du socle lumineux 20 et du rétroéclairage produit par la première source lumineuse 22 qui suit.

Le socle lumineux 20 comporte avantageusement une première paroi verticale 26 et une deuxième paroi verticale 28, s'étendant sensiblement le long de l'axe vertical B, ainsi qu'une première paroi transversale 30 et une deuxième paroi transversale 32, les parois transversales 30, 32 s'étendant le long d'un axe transversal C perpendiculaire à l'axe longitudinal A et à l'axe vertical B. La première paroi transversale 30 est positionnée parallèlement et en regard de la deuxième paroi transversale 32, la première paroi transversale 30 étant plus proche de la première zone d'extrémité verticale 15 que la deuxième paroi transversale 32 selon l'axe vertical B.

La première paroi verticale 26 est parallèle à la deuxième paroi verticale 28, ces deux parois verticales 26, 28 prolongeant chacune un bord d'extrémité transversale de la deuxième paroi transversale 32, dans des directions verticales opposées. La première paroi verticale 26 est ainsi agencée entre les première et deuxième parois transversales 30, 32 alors que la deuxième paroi verticale 28 s'étend entre la deuxième paroi transversale 32 et la surface de diffusion 12. Plus particulièrement, tel que cela est illustré, la deuxième paroi verticale 28 comporte à son extrémité libre une zone de réception de la surface de diffusion 12, cette dernière étant fixée, par collage par exemple, au premier bloc lumineux 16 via cette zone de réception. Par analogie, la surface de diffusion 12 s'étend ainsi verticalement entre l'une des extrémités de la deuxième paroi verticale 28 du premier bloc lumineux 16 et l'une des extrémités de la deuxième paroi verticale 28 du deuxième bloc lumineux 18.

La deuxième paroi transversale 32 présente une première face interne 34 orientée vers la surface de diffusion 12 et une première face externe 36 orientée vers la première zone d'extrémité verticale 15 du module lumineux 4. La deuxième paroi transversale 32 comprend au moins une première source lumineuse 22 qui, dans l'exemple illustré, prend la forme d'une première pluralité de diodes électroluminescentes 38 alignés les unes à côté des autres. Cette première source lumineuse 22 s'étend avantageusement sur la première face interne 34 de la deuxième paroi transversale 32 le long de l'axe longitudinal A entre le premier support 10 et le deuxième support 11 sur une bande électronique souple 35.

La bande électronique souple 35 est ici une carte de circuits imprimés flexible, comportant des pistes métalliques pour l'alimentation et le pilotage de composants électroniques, et notamment de la première pluralité de diodes électroluminescentes 38, fixés sur cette carte.

La première pluralité de diodes électroluminescentes 38 émet des rayons lumineux majoritairement le long de l'axe vertical B, perpendiculairement à la première face interne 34 et à l'opposé de la deuxième paroi transversale 32. Il convient de noter que par analogie, deux blocs lumineux 16, 18 étant ici symétriques par rapport à la surface de diffusion 12, le deuxième bloc lumineux 18 comprend également une première pluralité de diodes électroluminescentes 38 émettant des rayons lumineux majoritairement le long de l'axe vertical B, perpendiculairement à la première face interne 34 et à l'opposé de la deuxième paroi transversale 32 du deuxième bloc lumineux 18.

Le module lumineux 4 comporte une nappe de guidage de lumière 40 en regard de la surface de diffusion 12 à une distance constante de cette surface de diffusion 12. La nappe de guidage de lumière 40 s'étend de sorte que l'un de ces bords d'extrémité soit en regard de la première source lumineuse 22. Dans l'exemple illustré ici, la nappe de guidage de lumière 40 s'étend entre la première pluralité de diodes électroluminescentes 38 du premier bloc lumineux 16 et la première pluralité de diodes électroluminescentes du deuxième bloc lumineux 18.

La nappe de guidage de lumière 40 s'étend également le long de l'axe longitudinal A entre le premier support 10 et le deuxième support 11, la nappe de guidage de lumière 40 s'étendant ainsi entre le premier bloc lumineux 16 et le deuxième bloc lumineux 18 et entre le premier support 10 et le deuxième support 11.

Alternativement, la surface de diffusion 12 peut s'étendre en formant une courbe. La nappe de guidage de lumière 40 reprend la courbure de la surface de diffusion 12 de telle sorte que la nappe de guidage de lumière 40 soit à distance constante de la surface de diffusion 12.

On définit arbitrairement que la nappe de guidage de lumière 40 est positionnée à l'arrière de la surface de diffusion 12 selon l'axe transversal C, et inversement, la surface de diffusion 12 est positionnée à l'avant de la nappe de guidage de lumière 40 selon l'axe transversal C.

Chaque diode électroluminescente de la première sources lumineuse 22 émet ses rayons en direction de la nappe de guidage de lumière 40, cette nappe étant disposée suffisamment près des diodes pour que l'ensemble des rayons lumineux émis par les diodes pénètre dans la nappe de guidage de lumière 40. Les rayons lumineux se propagent dans la nappe de guidage de lumière 40 par des réflexions internes successives jusqu'à rencontrer un prisme apte à diriger ces rayons lumineux vers la surface de diffusion 12.

Plus particulièrement, la nappe de guidage de lumière 40 présente une face de réflexion 39 et une face de sortie 41. La face de sortie 41 est en regard de la surface de diffusion 12, et la face de réflexion 39 est opposée à la surface de diffusion 12 par rapport à la face de sortie 41. La face de réflexion 39 comprend des éléments prismatiques permettant de dévier les rayons lumineux et de les réfléchir en direction de la face de sortie 41 avec un angle d'incidence tel que ces rayons sont réfractés en dehors de la nappe de guidage lumineux 40, en direction de la surface de diffusion 12 en regard, plutôt que de continuer dans la nappe de guidage lumineux 40 par réflexions totales internes successives. La position des éléments prismatiques sur la face de réflexion 39 permet de localiser avec précision les zones de réfraction dans la face de sortie 41.

De la sorte, les rayons lumineux émis par la première pluralité de diodes électroluminescentes 38 vers la nappe de guidage de lumière 40 sont réfléchis par les éléments prismatiques de la face réfléchissante 39 vers la face de sortie 41 pour être projetés sur une deuxième face 42 de la surface de diffusion 12, également appelée par la suite face arrière 42 selon le référentiel choisi arbitrairement. Les rayons en sortie de la nappe de guidage lumineux 40 sont dirigés vers la face arrière 42 de la surface de diffusion 12 et cette surface de diffusion est configurée pour pouvoir être traversée depuis la face arrière vers la face avant par des premiers rayons lumineux, de sorte que les rayons lumineux sortant de la nappe de guidage de lumière traversent ensuite la surface de diffusion 12 de la deuxième face 42 vers la première face 14, c'est-à-dire de la face arrière 42 vers la face avant 14, pour ensuite être diffusés dans l'habitacle 2.

La nappe de guidage de lumière 40 peut présenter sur tout ou partie de la face de réflexion 39 des éléments prismatiques. En effet, la répartition des éléments prismatiques sur la face de réflexion 39 est influencée par le design de la surface de diffusion 12. Ainsi, la surface de diffusion 12 peut être constituée d'un matériau tolérant le passage de rayons lumineux au travers de celui-ci, la nappe de guidage de lumière 40 pouvant diffuser les rayons lumineux sur l'ensemble de la face de sortie 41 de façon homogène. La face de réflexion 39 présente alors des éléments prismatiques sur l'ensemble de sa surface pour diriger les rayons lumineux vers l'ensemble de la face arrière 42 de la surface de diffusion 12.

Alternativement, la surface de diffusion 12 peut être constituée d'un matériau empêchant le passage des rayons lumineux au travers mais présentant au moins une ouverture permettant le passage des rayons lumineux au travers de ladite ouverture, la nappe de guidage de lumière 40 diffusant les rayons lumineux plus particulièrement au niveau de l'ouverture de la surface de diffusion 12. Les éléments prismatiques seront positionnés sur la face de réflexion 39 de sorte à diriger les rayons lumineux vers l'ouverture de la surface de diffusion 12.

L'éclairage produit par la première pluralité de diodes électroluminescentes 38 et la nappe de guidage de lumière 40 sur la surface de diffusion 12 forme un rétroéclairage, également dénommé éclairage direct. En effet, la nappe de guidage de lumière 40 éclaire la face arrière 42 de la surface de diffusion 12, et les rayons lumineux sont amenés à traverser ladite surface de diffusion sans être déviés avant de se propager dans l'habitacle 2.

Le premier bloc lumineux 16 ainsi que le deuxième bloc lumineux 18 produisent alternativement un éclairage indirect en plus d'un rétroéclairage. Pour rappel, dans l'exemple ici illustré par les figures 2 et 3, le premier bloc lumineux 16 et le deuxième bloc lumineux 18 étant symétriques l'un de l'autre par rapport à la surface de diffusion 12, la description de caractéristiques pour l'un des blocs lumineux s'appliquent également à l'autre bloc lumineux.

La première paroi verticale 26 présente une surface avant 44 et une surface arrière 46 selon le référentiel choisi arbitrairement. La première paroi verticale 26 comprend sur la surface avant 44 la deuxième source lumineuse 24, et selon l'exemple illustré, la deuxième source lumineuse 24 étant une deuxième pluralité de diodes électroluminescentes 48. Cette deuxième pluralité de diodes électroluminescentes 48 s'étend sur la surface avant 44 de la première paroi verticale 26 avantageusement le long de l'axe longitudinal A entre le premier support 10 et le deuxième support 11 sur une bande électronique souple 35. La deuxième pluralité de diodes électroluminescentes 48 émet des rayons lumineux majoritairement le long de l'axe transversal C.

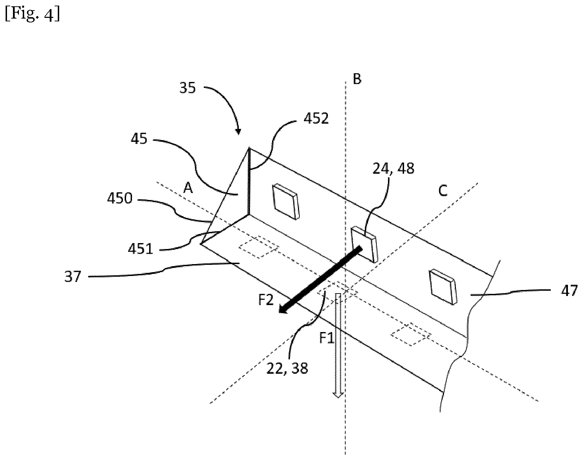

Selon l'invention et tel que représenté sur la figure 4, la bande électronique souple 35 sur laquelle est disposée la deuxième pluralité de diodes électroluminescentes 48 est également la même bande électronique souple 35 sur laquelle est disposée la première pluralité de diodes électroluminescentes 38. Ainsi, la première pluralité de diodes électroluminescentes 38 s'étend sur une première section 37 de la bande électronique souple 35, la deuxième pluralité de diodes électroluminescentes 48 s'étendant sur une deuxième section 47 de la bande électronique souple 35.

Afin que la première pluralité de diodes électroluminescentes 38 émette des premiers rayons lumineux F1 principalement le long de l'axe vertical B et que la deuxième pluralité de diodes électroluminescentes 48 émette des deuxièmes rayons lumineux F2 principalement le long de l'axe transversal C, c'est-à-dire selon deux sens d'émission principaux différents, la bande électronique souple 35 présente une zone de pliage 45 entre la première section 37 et la deuxième section 47 de la bande électronique souple 35.

A titre d'exemple non limitatif, la bande électronique souple 35 est ici pliée selon trois angles et directions différents le long de trois arêtes de pliage délimitant la zone de pliage 45 représentée sur la figure 4. La bande électronique souple 35 est initialement rectiligne avant son montage sur le module lumineux 4, la première source lumineuse 22 et la deuxième source lumineuse 24 étant ménagées sur la même face de la bande électronique souple 35. La bande électronique souple 35 est tout d'abord pliée le long d'une première arête 450, puis est pliée le long d'une deuxième arête 451 pour finir par être pliée le long d'une troisième arête 452. Grâce à cette succession de pliages, la première source lumineuse 22, et plus particulièrement la première pluralité de diodes électroluminescentes 38, émet les premiers rayons lumineux F1 selon un sens différent du sens d'émission des deuxièmes rayons lumineux F2 émis par la deuxième source lumineuse 24, et plus particulièrement la deuxième pluralité de diodes électroluminescentes 48.

Le premier bloc lumineux 16 comporte un réflecteur 50 sur lesquels les rayons lumineux émis par la deuxième source lumineuse 24 sont projetés. Le réflecteur 50 est configuré, que ce soit par la forme de sa surface réfléchissante ou par son orientation, pour réfléchir les rayons lumineux émis par la deuxième source lumineuse 24 vers la face avant 14 de la surface de diffusion 12.

Le réflecteur 50, comme l'ensemble des composants du premier bloc lumineux 16, s'étend longitudinalement entre le premier support 10 et le deuxième support 11. Le réflecteur 50 comporte une paroi de support 52 par laquelle le réflecteur 50 est solidaire de la première paroi transversale 30 du socle lumineux 20, et plus précisément d'un bord d'extrémité avant 300 de la première paroi transversale 30 selon le référentiel choisi arbitrairement. La paroi de support 52 comporte notamment une première portion 54 qui s'étend le long de l'axe transversal C, la première portion 54 formant un prolongement de la première paroi transversale 30 vers l'avant selon le référentiel choisi arbitrairement, et elle comporte une deuxième portion 56 sensiblement perpendiculaire qui s'étend le long de l'axe vertical B, la deuxième portion 56 étant ainsi sensiblement parallèle à la première paroi verticale 26 du socle lumineux 20. La réflecteur 50 comprend également une surface réfléchissante 58 sur laquelle les rayons lumineux sont dirigés en sortie de la deuxième source lumineuse 24, pour être réfléchis vers la face avant 14 de la surface de diffusion 12. Cette surface réfléchissante 58 s'étend également le long de l'axe longitudinal A entre le premier support 10 et le deuxième support 11 et entre la première portion 54 et la deuxième portion 56 de la paroi de support 52.

On comprend que l'orientation de la surface réfléchissante 58 influe sur la réorientation des rayons lumineux émis par la deuxième pluralité de diodes électroluminescentes 48. En effet, le choix de l'orientation de la surface réfléchissante 58 influe sur l'angle d'incidence des rayons lumineux émis par la deuxième source lumineuse 24, et donc sur la direction des rayons lumineux après réflexion par la surface réfléchissante 58. Le positionnement de la surface réfléchissante 58 peut être réglé au montage et resté figé pendant la durée de vie du véhicule, ou à tout le moins jusqu'au réglage manuel suivant. Alternativement, on peut prévoir un système de réglage automatique, ou commandé, , du positionnement de la surface réfléchissante 58, avec un actionneur qui permet le pivotement de la surface réfléchissante autour d'un axe perpendiculaire à la direction d'émission des rayons émis par la deuxième source lumineuse, pour permettre de régler après montage l'orientation des rayons lumineux incidents sur la surface de diffusion.

Les rayons lumineux réorientés suite à la réflexion par l'intermédiaire du réflecteur 50 éclairent ainsi la face avant 14 de la surface de diffusion 12. La face avant 14 de la surface de diffusion 12 est illuminée et réfléchit vers l'habitacle 2 une partie des rayons lumineux en provenance du réflecteur 50. De la sorte, la deuxième source lumineuse 24 à l'origine de ces rayons produit un éclairage qualifié d'indirect, car c'est l'éclairage de la face avant 14 de la surface de diffusion 12 qui produit l'éclairage de l'habitacle 2.

Cet éclairage indirect de l'habitacle 2 est d'intensité lumineuse plus faible que le rétroéclairage produit par la première pluralité de diodes électroluminescentes 38 et la nappe de guidage de lumière 40. L'éclairage indirect peut ainsi être choisi lors d'un éclairage nécessairement moins important, par exemple la nuit.

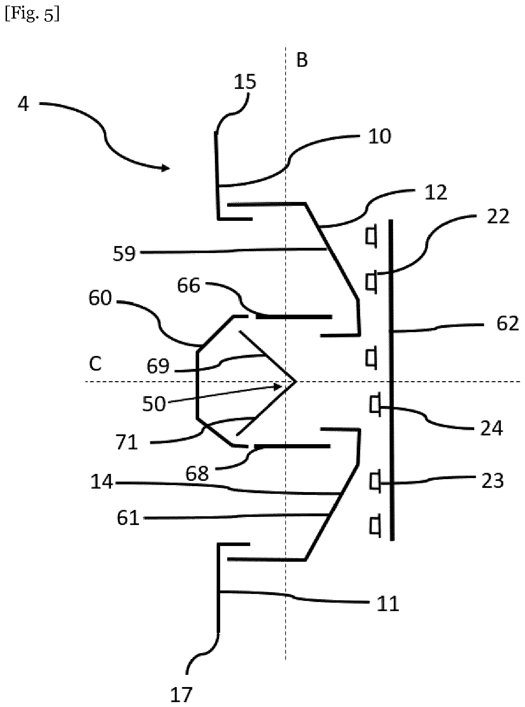

On va maintenant décrire d'autres modes de réalisation conformes à ce qui vient d'être décrit en ce que le module lumineux 4 produit un éclairage direct, ou rétroéclairage, par une première source lumineuse 22 et un éclairage indirect par une deuxième source lumineuse 24. Dans chacun des modes de réalisations qui vont être décrits, en référence aux figures 5 à 12, la surface de diffusion 12 est scindée en deux parties par la présence d'un bandeau formant un îlot 60 central, par lequel sont émis les rayons lumineux de la deuxième source lumineuse 24. L'îlot 60 est ménagé entre le premier support 10 et le deuxième support 11, en étant sensiblement centré entre les zones d'extrémité 15, 17 selon l'axe vertical B. L'îlot 60 peut également être circulaire et ne pas s'étendre entre les premier et deuxième supports 10, 11. L'îlot 60 délimite une partie supérieure 59 et une partie inférieure 61 sur la surface de diffusion 12.

Dans un deuxième mode de réalisation sortant du cadre de l'invention notamment illustré sur la figure 5, la première source lumineuse 22 et la deuxième source lumineuse 24 sont disposées sur une même face orientée vers l'avant d'une bande électronique plane 62 s'étendant principalement le long de l'axe vertical B, selon le référentiel choisi arbitrairement. On comprend que la bande électronique plane 62 ne présente pas de zone de pliage et qu'il n'est dès lors pas nécessaire qu'elle soit souple comme précédemment décrit.

Par ailleurs, dans cette configuration, les première et deuxième sources lumineuses 22, 24 émettent des rayons lumineux dans une même direction, c'est-à-dire principalement dans une direction transversale, le long de l'axe transversal C vers l'avant du module lumineux 4, selon le référentiel choisi. Les différentes sources lumineuses sont disposées sur la bande électronique plane 62 selon un agencement vertical spécifique. La deuxième source lumineuse 24 est positionnée verticalement en regard de l'îlot 60 et est encadrée verticalement de part et d'autre par la première source lumineuse 22 et une troisième source lumineuse 23. Dans l'exemple illustré sur la figure 5, chaque source lumineuse 22, 23, 24 est formée par deux rangées de diodes électroluminescentes, sans que cela soit limitatif de l'invention.

La première source lumineuse 22 émet des rayons lumineux directement vers la face arrière 42 de la surface de diffusion 12 au niveau de la partie supérieure 59. La surface de diffusion 12 transmet par la suite les rayons lumineux vers l'habitacle 2 du véhicule 1, produisant ainsi un rétroéclairage de l'habitacle 2. La bande électronique plane 62 présente de plus la troisième source lumineuse 23 en regard de la face arrière 42 de la surface de diffusion 12 au niveau de la partie inférieure 61, la troisième source lumineuse 23 émettant ainsi des rayons lumineux vers la face arrière 42 de la partie inférieure 61 de la surface de diffusion 12. Là encore, dans cette partie inférieure 61, la surface de diffusion 12 transmet les rayons lumineux vers l'habitacle 2 du véhicule 1, produisant un rétroéclairage identique à celui produit par la première source lumineuse 22.

Tel que cela a été précisé précédemment, la deuxième source lumineuse participe à produire un éclairage indirect par une projection, au niveau de l'îlot 60 de rayons lumineux sur la face avant 14 de la surface de diffusion. Les rayons lumineux émis par la deuxième source lumineuse 24 sont réfléchis dans l'îlot 60 par un réflecteur 50 le long de l'axe vertical B, en direction de la partie supérieure 59 à travers une paroi supérieure de diffusion 66 formée dans l'îlot 60 et en direction de la partie inférieure 61 à travers une paroi inférieure de diffusion 68 également formée dans l'îlot 60.

Pour cela, le réflecteur 50 présente une première face réfléchissante 69 et une deuxième face réfléchissante 71 sur lesquelles les rayons lumineux sont réfléchis. Plus particulièrement, au moins une rangée de diodes électroluminescentes de la deuxième source lumineuse 24 émet des rayons lumineux vers la première face réfléchissante 69 qui sont réfléchis vers la paroi supérieure de diffusion 66, éclairant ainsi la face avant 14 de la surface de diffusion 12 au niveau de la partie supérieure 59. Une autre rangée de diodes électroluminescentes de la deuxième source lumineuse 24 émet des rayons lumineux vers la deuxième face réfléchissante 71 qui sont réfléchis vers la paroi inférieure de diffusion 68, éclairant ainsi la face avant 14 de la surface de diffusion 12 au niveau de la partie inférieure 61 de la surface de diffusion 12.

Les rayons lumineux émis par la deuxième source lumineuse 24 sont réfléchis par le réflecteur 50 et diffusés par les parois de diffusion 66, 68 afin d'éclairer la face avant 14 de la surface de diffusion 12, produisant un éclairage indirect de l'habitacle 2 via la surface de diffusion 12.

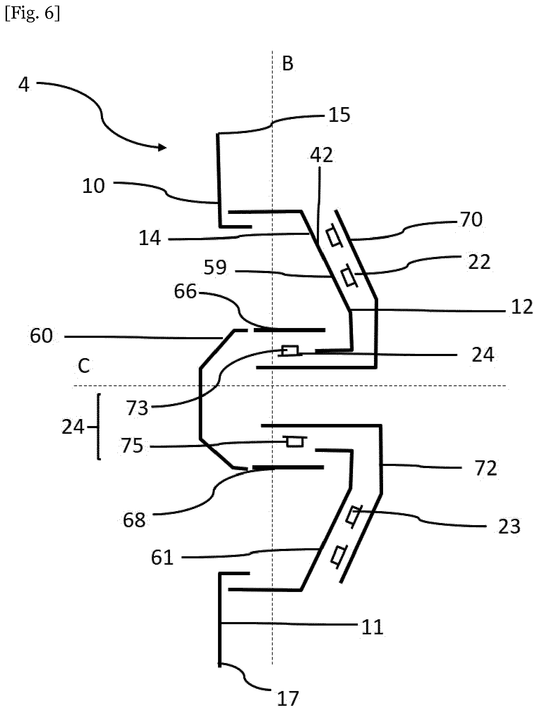

Dans un troisième mode de réalisation illustré sur la figure 6, un module lumineux 4 ne comporte pas de réflecteur et la deuxième source lumineuse 24 est configurée pour projeter directement ses rayons lumineux sur la paroi supérieure de diffusion 66 et la paroi inférieure de diffusion 68.

Il en résulte que la deuxième source lumineuse 24 est ménagée de sorte que les rayons lumineux émis par la deuxième source lumineuse 24 soient orientés vers la paroi supérieure de diffusion 66 et vers la paroi inférieure de diffusion 68. Pour cela, le module lumineux 4 comprend une bande électronique souple supérieure 70 présentant une première rangée de diodes électroluminescentes 73 s'étendant sur une portion de ladite bande et une première source lumineuse 22 s'étendant sur une autre portion de ladite bande, et une bande électronique souple inférieure 72 présentant une deuxième rangée de diodes électroluminescentes 75 s'étendant une portion de la bande électronique souple inférieure 72 et une troisième source lumineuse 23 s'étendant sur une autre portion de la bande électronique souple inférieure 72. Les rangées de diodes électroluminescentes 73, 75 forment ici la deuxième source lumineuse 24. La bande électronique souple supérieure 70 est pliée entre la portion présentant la première rangée de diodes électroluminescentes 73 et la portion présentant la première source lumineuse 22. De la sorte, les rayons lumineux émis par la première source lumineuse 22 sont projetés vers la face arrière 42 de la surface de diffusion 12, notamment au niveau de la partie supérieure 59, et les rayons lumineux émis par la première rangée de diodes électroluminescentes 73 sont projetés vers la paroi supérieure de diffusion 66 éclairant ainsi la face avant 14 de la surface de diffusion 12, au niveau de la partie supérieure 59. Similairement, la bande électronique souple inférieure 72 est pliée entre la portion présentant la deuxième rangée de diodes électroluminescentes 75 et la portion présentant la troisième source lumineuse 23. Ainsi, les rayons lumineux émis par la troisième source lumineuse 23 sont projetés vers la face arrière 42 de la surface de diffusion 12 au niveau de la portion inférieure 61, et les rayons lumineux émis par la deuxième rangée de diodes électroluminescentes 75 sont projetés vers la paroi inférieure de diffusion 68, éclairant ainsi la face avant 14 de la surface de diffusion 12, notamment au niveau de la portion inférieure 61.

De cette façon, la première source lumineuse 22 et la troisième source lumineuse 23 participent au rétroéclairage, ou éclairage direct, du module lumineux 4 et la première et deuxième rangée de diodes électroluminescentes 73, 75 produisent l'éclairage indirect du module lumineux 4, en éclairant des parois de diffusion 66, 68 éclairant la face avant 14 de la surface de diffusion 12.

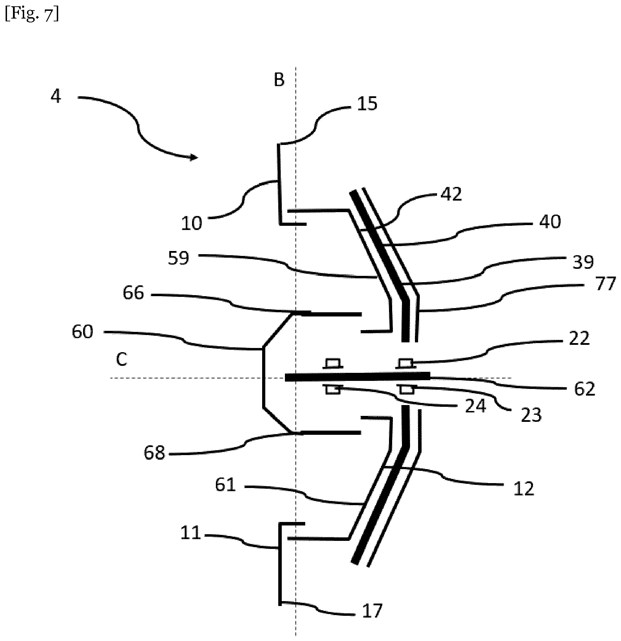

Dans un quatrième mode de réalisation sortant du cadre de l'invention illustré sur la figure 7, le module lumineux 4 diffère de ce qui précède en ce que les sources lumineuses sont disposées sur une même bande électronique plane 62, formant une carte de circuits imprimés, qui est cette fois agencée sensiblement perpendiculairement à la surface de diffusion 12. Les première et deuxième sources lumineuses 22, 24 sont orientées de manière à émettre des rayons lumineux principalement selon une direction verticale le long de l'axe vertical B.

La bande électronique plane 62 est agencée sensiblement au centre de la dimension verticale du module lumineux 4, au niveau de l'îlot 60. Une partie avant de la bande électronique plane 62 s'étend transversalement en avant de la surface de diffusion 12, au sein de l'îlot 60, et une partie arrière de la bande électronique plane 62 s'étend transversalement en arrière de la surface de diffusion 12, selon le référentiel choisi arbitrairement. Par ailleurs, la bande électronique plane 62 présente une face inférieure tournée vers la partie inférieure 61 et une face supérieure tournée vers la partie supérieure 59.

La première source lumineuse 22 est ménagée sur la face supérieure de la bande électronique plane 62 au niveau de la partie arrière de cette dernière. La troisième source lumineuse 23 est ménagée sur la face inférieure de la bande électronique plane 62 au niveau de la partie arrière de cette dernière. Les première et troisième sources lumineuses 22, 23 émettent ainsi des rayons lumineux principalement le long de l'axe vertical B, chaque source lumineuse émettant des rayons lumineux dans des directions opposées. Les rayons lumineux de la première source lumineuse 22, tout comme les rayons lumineux de la troisième source lumineuse 23, sont émis dans une nappe de guidage de lumière 40. Comme décrit dans la mode de réalisation préféré, la nappe de guidage de lumière 40 projette ainsi les rayons lumineux vers la face arrière 42 de la surface de diffusion 12 les diffusant ensuite dans l'habitacle 2 du véhicule 1, produisant un rétroéclairage de l'habitacle 2.

La deuxième source lumineuse 24 est ménagée sur la face supérieure et la face inférieure de la bande électronique plane 62 au niveau de la partie avant de cette dernière. La deuxième source lumineuse 24 émet des rayons principalement le long de l'axe vertical B dans l'îlot 60 vers les parois des diffusions 66, 68. Les parois de diffusions 66, 68 projetant ensuite les rayons lumineux sur la face avant 14 de la surface de diffusion 12, émettant un éclairage indirect.

Tel que cela est visible sur la figure 7, le module comporte en outre une paroi réfléchissante 77 disposée à l'arrière, selon le référentiel choisi, de l'élément d'habillage 12, cette paroi réfléchissante étant ici en regard de la nappe de guidage. De la sorte, la paroi réfléchissante permet aussi bien de récupérer les rayons lumineux qui sortiraient de la face arrière de la nappe de guidage 40, à l'opposé de l'élément d'habillage de l'habitacle 12, afin de les renvoyer vers cet élément d'habillage, et de récupérer les quelques rayons émis par la deuxième source lumineuse 24 ayant traversés l'élément d'habillage 12 pour les renvoyer vers cet élément d'habillage.

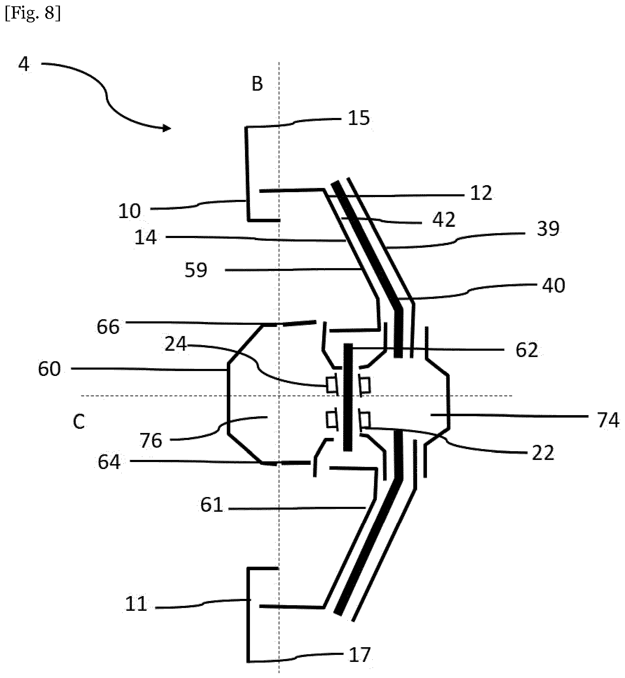

Selon un cinquième mode de réalisation sortant du cadre de l'invention et tel qu'illustré sur la figure 8, la bande électronique plane 62 est positionnée à l'arrière de l'îlot 60 en s'étendant principalement le long de l'axe vertical B. La bande électronique plane 62 présente ainsi une face postérieure tournée vers la nappe de guidage de lumière 40 et une face antérieure tournée vers l'intérieur de l'îlot 60. La première source lumineuse 22 est située sur la face postérieure de la bande électronique plane 62, ladite source 22 émettant des rayons lumineux dans une cavité arrière réfléchissante 74.

La deuxième source lumineuse 24 est située sur la face antérieure de la bande électronique plane 62, ladite source 24 émettant des rayons lumineux dans une cavité avant réfléchissante 76 ménagée dans l'îlot 60. Les première et deuxième sources lumineuses 22, 24 émettent des rayons lumineux le long de l'axe transversal C, la première source lumineuse 22 émettant des rayons lumineux vers l'arrière du module lumineux 4 et la deuxième source lumineuse 24 émettant des rayons lumineux vers l'avant du module lumineux 4, selon le référentiel arbitrairement choisi.

La première source lumineuse 22 émet des rayons lumineux dans une cavité arrière réfléchissante 74, cette dernière devenant ainsi une cavité lumineuse. En effet, les faces orientées vers l'intérieur de la cavité arrière réfléchissante 74 réfléchissent vers l'intérieur de la cavité arrière réfléchissante 74 les rayons lumineux émis par la première source lumineuse 22. La cavité arrière réfléchissante 74 projette ainsi une partie des rayons lumineux vers la nappe de guidage de lumière 40. Comme précisé précédemment, la nappe de guidage de lumière 40 oriente les rayons lumineux vers la face arrière 42 de la surface de diffusion 12, cette dernière les projetant dans l'habitacle 2 du véhicule 1, produisant ainsi un rétroéclairage de l'habitacle 2.

La deuxième source lumineuse 24 émet dans une cavité avant réfléchissante 76, cette dernière devenant ainsi une cavité lumineuse. Similairement à la cavité arrière réfléchissante 74, les faces orientées vers l'intérieure de la cavité avant réfléchissante 76 réfléchissent vers l'intérieur de la cavité avant réfléchissante 76 les rayons lumineux émis par la deuxième source lumineuse 24. La cavité avant réfléchissante 76 représente l'intérieur de l'îlot 60, ladite cavité projetant ainsi une partie des rayons lumineux vers les parois de diffusion 66, 68 de l'îlot 60 propageant les rayons lumineux sur la face avant 14 de la surface de diffusion 12, réalisant un éclairage indirect de la surface de diffusion 12.

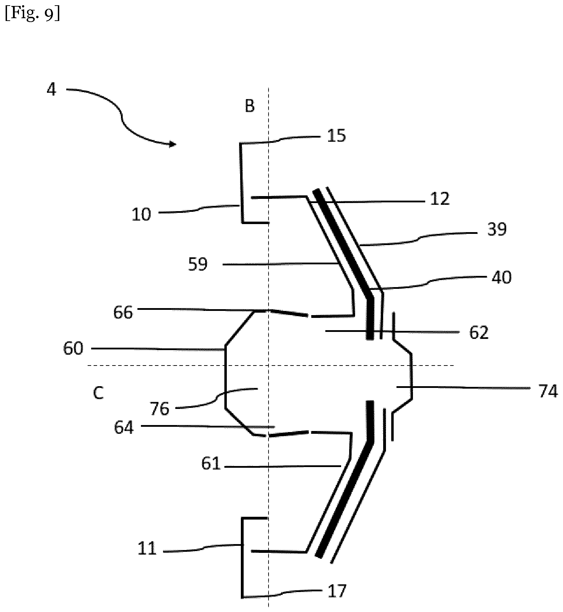

Selon un sixième mode de réalisation sortant du cadre de l'invention, illustré à titre d'exemple sur la figure 9, on peut également prévoir que la nappe de guidage de lumière 40 et les parois de diffusion soient constituées d'éléments luminescents non représentés sur l'ensemble des figures et ne nécessitent pas de sources lumineuses pour émettre des rayons lumineux. Ce type d'émission lumineuse réalise également un éclairage indirect et un rétroéclairage, comme décrit ci-dessus.

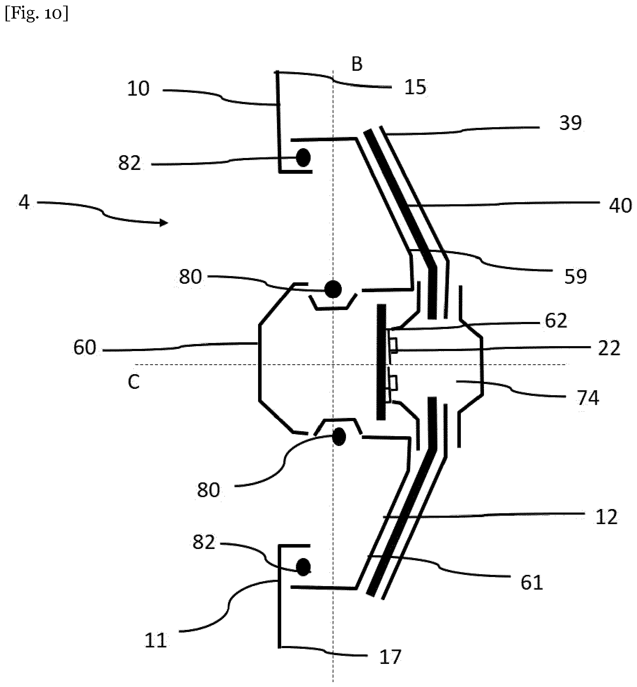

Un module lumineux 4 peut alternativement présenter un rétroéclairage comprenant une première source lumineuse 22, une cavité arrière réfléchissante 74 et une nappe de guidage de lumière 40 et des sources lumineuses indirectes, tel qu'illustré sur la figure 10 selon un septième mode de réalisation sortant du cadre de l'invention. Ainsi, l'îlot 60 présente une première source lumineuse indirecte 80 éclairant la face avant 14 de la surface de diffusion 12. Alternativement, le premier support 10 et le deuxième support 11 comportent une deuxième source lumineuse indirecte 82 éclairant également la face avant 14 de la surface de diffusion 12. Ces sources lumineuses indirectes 80, 82 réalisent un éclairage indirect de l'habitacle 2 du véhicule 1.

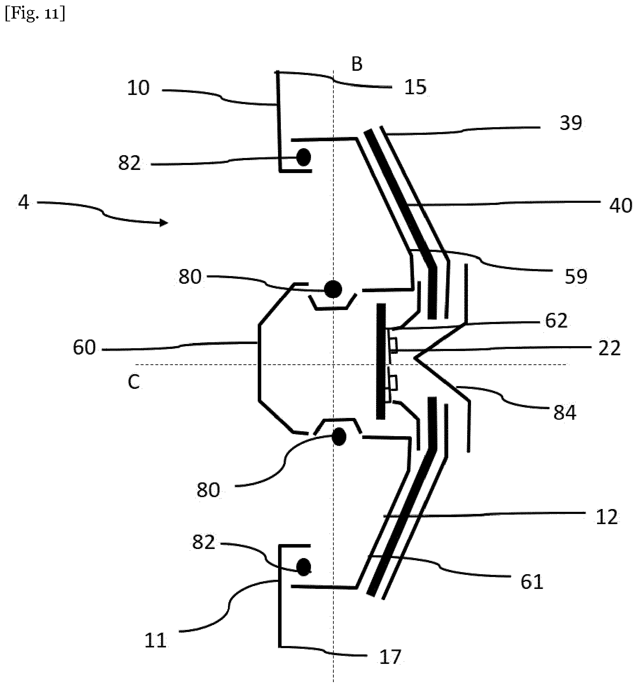

Alternativement selon un huitième mode de réalisation sortant du cadre de l'invention et tel qu'illustré sur la figure 11, la première source lumineuse 22 émet des rayons lumineux sur un réflecteur 84 disposé dans la cavité arrière réfléchissante 74. Les rayons émis par la première source lumineuse 22 sont émis principalement le long de l'axe transversal C. Le réflecteur 84 présente ainsi deux faces réfléchissantes réorientant les rayons lumineux émis par la première source lumineuse 22 le long de l'axe vertical B, dans deux directions opposées pour que la partie supérieure 59 et la partie inférieure 61 de la surface de diffusion 12 soient éclairées, vers la nappe de guidage de lumière 40. La nappe de guidage de lumière 40 projette les rayons lumineux vers la face arrière de la surface de diffusion 12, réalisant ainsi un rétroéclairage de l'habitacle 2 du véhicule 1.

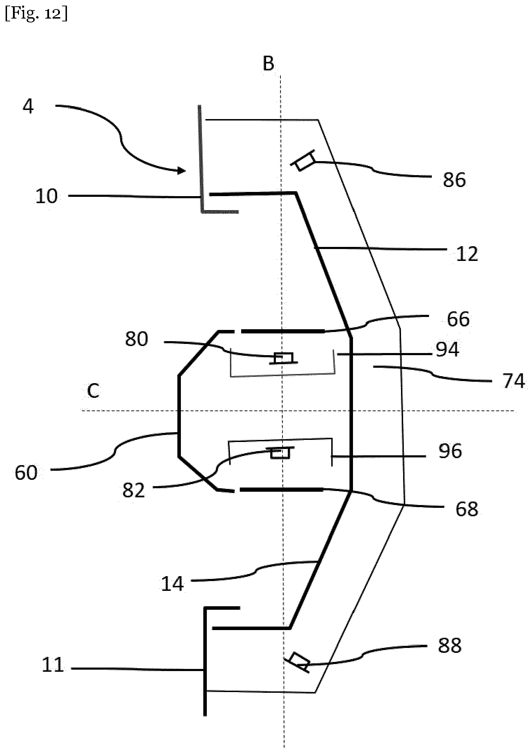

Selon un neuvième mode de réalisation sortant du cadre de l'invention et tel qu'illustré sur la figure 12, le module lumineux 4 comprend au moins quatre sources lumineuses, chacune disposée sur une bande électronique souple indépendante.

Une première source lumineuse arrière 86 est ménagée dans le première support 10 et une deuxième source lumineuse arrière 88 est ménagée dans le deuxième support 11. Les sources lumineuses arrières 86, 88 éclairent une cavité arrière réfléchissante 74 s'étendant entre le premier support 10 et le deuxième support 11 à l'arrière de la surface de diffusion 12. L'éclairage de la cavité arrière réfléchissante 74 par les rayons lumineux émis par les sources lumineuses arrières 86, 88 illumine la face arrière 42 de la surface de diffusion 12, produisant un rétroéclairage de l'habitacle 2 du véhicule 1.

L'îlot 60 du module lumineux 4 comprend une première source lumineuse indirecte 80 et une deuxième source lumineuse indirecte 82. La première source lumineuse indirecte 80 émet des rayons lumineux le long de l'axe vertical B directement sur une paroi supérieure de diffusion 66 de l'îlot 60, la deuxième source lumineuse indirecte 82 émettant également des rayons lumineux le long de l'axe vertical B mais dans une direction opposée aux rayons émis par la première source lumineuse indirecte 80 directement sur une paroi inférieure de diffusion 68. La première source lumineuse indirecte 80 est isolée dans une première boîte isolante 94, la deuxième source lumineuse indirecte 82 étant isolée dans une deuxième boîte isolante 96. Les parois de diffusions 66, 68 de l'îlot 60 projettent ces rayons lumineux vers la face avant 14 de la surface de diffusion 12, réalisant un éclairage indirect de l'habitacle 2 du véhicule 1.

Le module lumineux 4 permet ainsi de proposer alternativement ou simultanément un éclairage indirect et un rétroéclairage de l'habitacle 2 d'un véhicule 1. Selon l'invention, le module lumineux 4 peut adapter la luminosité de l'habitacle 2 selon la luminosité extérieure du véhicule 1 et/ou selon le souhait du conducteur et/ou du ou des passagers du véhicule 1.

## Revendications

1. Module lumineux (4) pour l'éclairage d'un habitacle de véhicule (1), le module lumineux (4) comprenant au moins une source lumineuse (22, 23, 24) configurée pour émettre des rayons lumineux et un élément d'habillage de l'habitacle agencé sur le trajet des rayons lumineux émis par l'au moins une source lumineuse (22, 23, 24), le module lumineux (4) comportant au moins une première source lumineuse (22, 23) configurée pour émettre des rayons lumineux sur une première face (42) de l'élément d'habillage (12) et au moins une deuxième source lumineuse (24) configurée pour émettre des rayons lumineux sur une deuxième face (14) de l'élément d'habillage (12) opposée à ladite première face (42), **caractérisé en ce que** la première source lumineuse (22, 23) et la deuxième source lumineuse (24) sont disposées sur une bande électronique souple (35) qui présente une zone de pliage (45) entre la première source lumineuse (22, 23) et la deuxième source lumineuse (24).

2. Module lumineux (4) selon la revendication 1, dans lequel l'au moins une première source lumineuse (22, 23) et l'au moins une deuxième source lumineuse (24) consistent respectivement en une série de diodes électroluminescentes.

3. Module lumineux (4) selon l'une quelconque des revendications précédentes, dans lequel la deuxième face (14) de l'élément d'habillage (12) est configurée pour permettre la réflexion de rayons lumineux, la deuxième source (24) émettant des rayons qui sont réfléchis par cette deuxième face (14).

4. Module lumineux (4) selon l'une quelconque des revendications précédentes, dans lequel l'élément d'habillage (12) est configuré pour permettre le passage de rayons lumineux au travers dudit élément d'habillage (12), la première source émettant des rayons à travers l'élément d'habillage (12) pour produire un rétroéclairage.

5. Module lumineux (4) selon la combinaison des revendications 3 et 4, dans lequel la première source lumineuse (22), la deuxième source lumineuse (24) et l'élément d'habillage (12) sont configurés pour que les rayons émis se propagent vers l'extérieur du module lumineux (4) depuis la deuxième face (14) de l'élément d'habillage (12).

6. Module lumineux (4) selon l'une quelconque des revendications précédentes, dans lequel le module lumineux (4) comporte une nappe de guidage de lumière (40) interposée entre la première source lumineuse (22, 23) et la première face (42) de l'élément d'habillage (12).

7. Module lumineux (4) selon l'une quelconque des revendications précédentes, dans lequel le module lumineux (4) comporte au moins un réflecteur (50, 84) interposé entre l'une des sources lumineuses (22, 23, 24) et l'une des faces (14, 42) de l'élément d'habillage (12).

8. Module lumineux (4) selon l'une quelconque des revendications précédentes, dans lequel le module lumineux (4) comprend une première zone d'extrémité (15) et une deuxième zone d'extrémité (17) de part et d'autre de l'élément d'habillage (12), **caractérisé en ce que** la bande électronique souple (35) est ménagée au niveau d'au moins une des zones d'extrémité (15,17) du module lumineux (4).

9. Module lumineux (4) selon l'une quelconque des revendications précédentes, dans lequel la première source lumineuse (22, 23) et la deuxième source lumineuse (24) sont agencées pour émettre des rayons lumineux selon des sens principaux d'émission différents.

10. Module lumineux (4) selon l'une quelconque des revendications précédentes, dans lequel le module lumineux (4) comprend un module de contrôle configuré pour piloter l'alimentation électrique de la première source lumineuse (22, 23) et l'alimentation électrique de la deuxième source lumineuse (24).

11. Module lumineux (4) selon la revendication 10, dans lequel le module de contrôle est configuré pour adapter l'alimentation de la première source lumineuse (22, 23) et/ou de la deuxième source lumineuse (24).

## Patentansprüche

1. Leuchtmodul (4) zur Beleuchtung eines Fahrzeuginnenraums (1), wobei das Leuchtmodul (4) mindestens eine Lichtquelle (22, 23, 24), die dazu ausgestaltet ist, Lichtstrahlen zu emittieren, und ein Verkleidungselement des Innenraums, das auf dem Weg der von der mindestens einen Lichtquelle (22, 23, 24) emittierten Lichtstrahlen angeordnet ist, umfasst, wobei das Leuchtmodul (4) mindestens eine erste Lichtquelle (22, 23) aufweist, die dazu ausgestaltet ist, Lichtstrahlen auf einer ersten Seite (42) des Verkleidungselements (12) zu emittieren, und mindestens eine zweite Lichtquelle (24), die dazu ausgestaltet ist, Lichtstrahlen auf einer zweiten Seite (14) des Verkleidungselements (12) zu emittieren, die zu der ersten Seite (42) entgegengesetzt ist, **dadurch gekennzeichnet, dass** die erste Lichtquelle (22, 23) und die zweite Lichtquelle (24) auf einem flexiblen elektronischen Band (35) angeordnet sind, das einen Biegebereich (45) zwischen der ersten Lichtquelle (22, 23) und der zweiten Lichtquelle (24) aufweist.

2. Leuchtmodul (4) nach Anspruch 1, wobei die mindestens eine erste Lichtquelle (22, 23) und die mindestens eine zweite Lichtquelle (24) jeweils aus einer Reihe von Lichtdioden bestehen.

3. Leuchtmodul (4) nach einem der vorhergehenden Ansprüche, wobei die zweite Seite (14) des Verkleidungselements (12) dazu ausgestaltet ist, die Reflexion von Lichtstrahlen zu ermöglichen, wobei die zweite Quelle (24) Strahlen emittiert, die von dieser zweiten Seite (14) reflektiert werden.

4. Leuchtmodul (4) nach einem der vorhergehenden Ansprüche, wobei das Verkleidungselement (12) dazu ausgestaltet ist, den Durchgang von Lichtstrahlen durch das Verkleidungselement (12) hindurch zu ermöglichen, wobei die erste Quelle Strahlen durch das Verkleidungselement (12) hindurch emittiert, um eine Rückbeleuchtung zu erzeugen.

5. Leuchtmodul (4) nach der Kombination der Ansprüche 3 und 4, wobei die erste Lichtquelle (22), die zweite Lichtquelle (24) und das Verkleidungselement (12) dazu ausgestaltet sind, dass sich die emittierten Strahlen von der zweiten Seite (14) des Verkleidungselements (12) aus nach außerhalb des Leuchtmoduls (4) ausbreiten.

6. Leuchtmodul (4) nach einem der vorhergehenden Ansprüche, wobei das Leuchtmodul (4) eine Lichtleitungslage (40) aufweist, die zwischen die erste Lichtquelle (22, 23) und die erste Seite (42) des Verkleidungselements (12) gesetzt ist.

7. Leuchtmodul (4) nach einem der vorhergehenden Ansprüche, wobei das Leuchtmodul (4) mindestens einen Reflektor (50, 84) aufweist, der zwischen eine der Lichtquellen (22, 23, 24) und eine der Seiten (42) des Verkleidungselements (12) gesetzt ist.

8. Leuchtmodul (4) nach einem der vorhergehenden Ansprüche, wobei das Leuchtmodul (4) einen ersten Endbereich (15) und einen zweiten Endbereich (17) beidseits des Verkleidungselements (12) umfasst, **dadurch gekennzeichnet, dass** das flexible elektronische Band (35) an mindestens einem der Endbereiche (15, 17) des Leuchtmoduls (4) ausgebildet ist.

9. Leuchtmodul (4) nach einem der vorhergehenden Ansprüche, wobei die erste Lichtquelle (22, 23) und die zweite Lichtquelle (24) angeordnet sind, um Lichtstrahlen gemäß verschiedenen Hauptemissionsrichtungen zu emittieren.

10. Leuchtmodul (4) nach einem der vorhergehenden Ansprüche, wobei das Leuchtmodul (4) ein Steuerungsmodul umfasst, um die Stromversorgung der ersten Lichtquelle (22, 23) und die Stromversorgung der zweiten Lichtquelle (24) zu steuern.

11. Leuchtmodul (4) nach Anspruch 10, wobei das Steuerungsmodul dazu ausgestaltet ist, die Versorgung der ersten Lichtquelle (22, 23) und/oder der zweiten Lichtquelle (24) anzupassen.

## Claims

1. Luminous module (4) for lighting a passenger compartment of a vehicle (1), the luminous module (4) comprising at least one light source (22, 23, 24) configured to emit light rays and a trim element for the passenger compartment, arranged on the path of the light rays emitted by the at least one light source (22, 23, 24), the Luminous module (4) comprising at least one first light source (22, 23) configured to emit light rays on a first face (42) of the trim element (12) and at least one second light source (24) configured to emit light rays on a second face (14) of the trim element (12), opposite said first face (42), **characterized in that** the first light source (22, 23) and the second light source (24) are arranged on a flexible electronic strip (35) which has a bend zone (45) between the first light source (22, 23) and the second light source (24).

2. Luminous module (4) according to Claim 1, wherein the at least one first light source (22, 23) and the at least one second light source (24) each consist of a series of light-emitting diodes.

3. Luminous module (4) according to either one of the preceding claims, wherein the second face (14) of the trim element (12) is configured to allow the reflection of light rays, the second source (24) emitting rays which are reflected by this second face (14).

4. Luminous module (4) according to any one of the preceding claims, wherein the trim element (12) is configured to allow light rays to pass through said trim element (12), the first source emitting rays through the trim element (12) to produce backlighting.

5. Luminous module (4) according to the combination of Claims 3 and 4, wherein the first light source (22), the second light source (24) and the trim element (12) are configured such that the emitted rays propagate towards the outside of the Luminous module (4) from the second face (14) of the trim element (12).

6. Luminous module (4) according to any one of the preceding claims, wherein the luminous module (4) comprises a light guide sheet (40) interposed between the first light source (22, 23) and the first face (42) of the trim element (12).

7. Luminous module (4) according to any one of the preceding claims, wherein the luminous module (4) comprises at least one reflector (50, 84) interposed between one of the light sources (22, 23, 24) and one of the faces (14, 42) of the trim element (12).

8. Luminous module (4) according to any one of the preceding claims, wherein the luminous module (4) comprises a first end zone (15) and a second end zone (17) on either side of the trim element (12), **characterized in that** the flexible electronic strip (35) is provided in at least one of the end zones (15, 17) of the Luminous module (4).

9. Luminous module (4) according to any one of the preceding claims, wherein the first light source (22, 23) and the second light source (24) are arranged to emit light rays in different main directions of emission.

10. Luminous module (4) according to any one of the preceding claims, wherein the Luminous module (4) comprises a control module configured to control the power supply to the first light source (22, 23) and the power supply to the second light source (24).

11. Luminous module (4) according to Claim 10, wherein the control module is configured to adapt the power supply to the first light source (22, 23) and/or to the second light source (24).
